# EUROPEAN PATENT APPLICATION

(11) **EP 4 704 450 A1**
(43) Date of publication of application: **04.03.2026**
(21) Application number: 23961055.3
(22) Date of filing: 11.12.2023
(51) Int. Cl.: H04W 4/40

(54) **DATA SENDING METHOD, ELECTRONIC DEVICE, COMMUNICATION SYSTEM, STORAGE MEDIUM, AND CHIP**

(71) Applicant: Guangdong Coros Sports Technology Co., Ltd, Dongguan, Guangdong 523000 (CN)
(72) Inventor: NIU, Haotian, Dongguan, Guangdong 523000 (CN); TANG, Yu, Dongguan, Guangdong 523000 (CN); LIU, Xin, Dongguan, Guangdong 523000 (CN); YU, Xiang, Dongguan, Guangdong 523000 (CN)
(74) Representative: Appelt, Christian W.
(86) International application number: PCT/CN2023/137960
(87) International publication number: WO 2025/123189

(57) **Abstract**

The present disclosure is related to the communication technology field, more particularly, to a data transmission method, an electronic device, a communication system, a storage medium, and a chip. The method can be used to solve the problem in the existing technology that the user waits too long during the data transmission and the user experience is affected. The method is applied to the communication system. The communication system includes a first electronic device and a second electronic device. The method includes controlling the first electronic device to continuously collecting user data, upon detecting that the user data satisfying a first preset condition, controlling the first electronic device to establish the communication connection with the second electronic device, controlling the first electronic device to determine the first target data from the user data, and controlling the first electronic device to transmit the first target data to the second electronic device.

## Description

### TECHNICAL FIELD

The present disclosure generally relates to the communication technology field and, more particularly, to a transmission method, an electronic device, a communication system, a storage medium, and a chip.

### BACKGROUND

A cyclometer is usually mounted at a bike to display and record multi-dimensional data such as a riding distance, a duration, a speed, a heart rate, and a cadence to provide data support for scientific cycling.

Currently, a cyclometer typically synchronizes the recorded data in real-time to a terminal device such as a smartphone and a watch via Bluetooth connection during the cycling of the user. Thus, the cyclometer and the terminal device need to maintain a constant Bluetooth connection, which consumes excessive power for data synchronization and affects the battery life of the cyclometer. Another approach is to establish a Bluetooth connection with a terminal device such as the smartphone and the watch after the user finishes cycling, and then send the recorded data to the terminal device via the Bluetooth connection to complete data synchronization. However, the amount of data generated during cycling is usually large, and the data transmission rate based on Bluetooth is low. Thus, the data transmission takes a long time. Each time after the user finishes cycling, the user needs to stay with the bike and wait until the data transmission ends before leaving, or the user needs to remove the cyclometer from the bike to carry the cyclometer for data transmission. The user experience is poor.

### SUMMARY

### TECHNICAL PROBLEMS

The present disclosure provides a data transmission method, an electronic device, a communication system, a storage medium, and a chip to solve the problem in the existing technology that the battery life is shortened due to the continuous data connection, and that user experience is affected because the user waits too long during the data transmission after exercising.

### TECHNICAL SOLUTIONS

A first aspect of embodiments of the present disclosure provides a data transmission method, applied to a communication system including a first electronic device and a second electronic device. The method includes controlling the first electronic device to continuously collect user data, upon detecting that the user data satisfies a first preset condition, controlling the first electronic device to establish a communication connection with the second electronic device, controlling the first electronic device to determine first target data from the user data, and controlling the first electronic device to transmit the first target data to the second electronic device via the communication connection.

In connection with the first aspect, in a first implementation of the first aspect, controlling the first electronic device to determine the first target data from the user data includes controlling the first electronic device to determine user data collected between a first time and a second time as the first target data. The first time is when the first electronic device begins collecting the user data, and the second time is when the user data is detected to meet the first preset condition.

In connection with the first aspect, in a second implementation of the first aspect, the first preset condition includes at least one of:
detecting that a data amount of the user data collected by the first electronic device between the first time and the second time is greater than or equal to a data amount threshold; or
detecting that a time interval between the first time and the second time is greater than or equal to a time threshold.

In connection with the first aspect, in a third implementation of the first aspect, the method further includes upon detecting that transmission of the first target data is completed, controlling the first electronic device or the second electronic device to disconnect the communication connection.

In connection with the first aspect, in a fourth implementation of the first aspect, the method further includes upon detecting that the first electronic device satisfies a second preset condition, controlling the first electronic device to stop collecting the user data and to establish the communication connection with the second electronic device, controlling the first electronic device to determine second target data from the user data, and controlling the first electronic device to transmit the second target data to the second electronic device via the communication connection.

In connection with the first aspect, in a fifth implementation of the first aspect, controlling the first electronic device to determine the second target data from the user data includes controlling the first electronic device to determine the user data collected between the first time and a third time as the second target data. The first time is when the first electronic device begins collecting the user data, and the third time is when the first electronic device is detected to meet a second preset condition.

In connection with the first aspect, in a sixth implementation of the first aspect, the second preset condition includes detecting that the first electronic device receives a control instruction of controlling the first electronic device to stop collecting the user data.

In connection with the first aspect, in a seventh implementation of the first aspect, the method further includes upon detecting that transmission of the second target data is completed, controlling the first electronic device or the second electronic device to disconnect the communication connection.

In connection with the first aspect, in an eighth implementation of the first aspect, the system further includes a third electronic device and a server. The method further includes controlling the second electronic device to transmit the received first target data and the second target data to the third electronic device, and controlling the third electronic device to transmit the received first target data and second target data to the server.

In connection with the first aspect, in a ninth implementation of the first aspect, the user data includes at least one of a riding distance, a riding duration, a riding speed, a user heart rate, calories burned, a slope during riding, a riding trajectory, or cadence.

A second aspect of embodiments of the present disclosure provides a data transmission method, applied to a first electronic device. The method includes continuously collecting user data, upon detecting that the user data satisfies a first preset condition, controlling the first electronic device to establish a communication connection with a second electronic device, determining first target data from the user data, and transmitting the first target data to the second electronic device via the communication connection.

In connection with the second aspect, in a first implementation of the second aspect, determining the first target data from the user data includes determining user data collected between a first time and a second time as the first target data. The first time is when the first electronic device begins collecting the user data, and the second time is when the user data is detected to meet the first preset condition.

In connection with the second aspect, in a second implementation of the second aspect, the first preset condition includes at least one of:

a data amount of the user data collected by the first electronic device between the first time and the second time being greater than or equal to a data amount threshold; or

a time interval between the first time and the second time being greater than or equal to a time threshold.

In connection with the second aspect, in a third implementation of the second aspect, the method further includes disconnecting the communication connection after detecting that transmission of the first target data is completed.

In connection with the second aspect, in a fourth implementation of the second aspect, he method further includes upon detecting that the first electronic device satisfies a second preset condition, stopping collecting the user data and establishing a communication connection with the second electronic device, determining second target data from the user data, and transmitting the second target data to the second electronic device via the communication connection.

In connection with the second aspect, in a fifth implementation of the second aspect, determining the second target data from the user data includes determining user data collected between the first time and a third time as the second target data. The first time is when the first electronic device begins collecting the user data, and the third time is when the first electronic device is detected to meet the second preset condition.

In connection with the second aspect, in a sixth implementation of the second aspect, the second preset condition includes detecting that the first electronic device receives a control instruction used to control the first electronic device to stop collecting the user data.

In connection with the second aspect, in a seventh implementation of the second aspect, the method further includes disconnecting the communication connection upon detecting that transmission of the second target data is completed.

In connection with the second aspect, in an eighth implementation of the second aspect, the user data includes at least one of a riding distance, a riding duration, a riding speed, a user heart rate, calories burned, a slope during riding, a riding trajectory, and a cadence.

A third aspect of embodiments of the present disclosure provides a communication system, including a first electronic device and a second electronic device. The first electronic device is configured to execute the data transmission method of the second aspect. The second electronic device is configured to receive the user data transmitted by the first electronic device.

In connection with the third aspect, in a first implementation of the third aspect, the system further includes a third electronic device. The second electronic device is further configured to transmit the received user data to the third electronic device. The third electronic device is configured to receive and transmit the user data to a server.

In connection with the third aspect, in a second implementation of the third aspect, the second electronic device is a wearable device.

A fourth aspect of embodiments of the present disclosure provides a computer-readable storage medium storing a computer program that, when executed by a processor, causes the processor to implement the data transmission methods of the first aspect and the second aspect.

A fifth aspect of embodiments of the present disclosure provides a chip, including a processor and a memory. The memory stores a computer program that, when executed by the processor, causes the processor to implement the data transmission methods of the first aspect and the second aspect.

A sixth aspect of embodiments of the present disclosure provides a computer program product storing a computer program that, when executed by a processor, causes the processor to implement the data transmission methods of the first aspect and the second aspect.

### BENEFICIAL EFFECTS

According to the method of embodiments of the present disclosure, when the first electronic device (e.g., cyclometer) collects the user data in real-time, according to the preset condition, a communication connection can be established with the second electronic device (e.g., watch or cell phone) at every certain time. Some user data can be sent to the second electronic device through the communication connection. Then, the communication connection can be disconnected. In the method, the power consumption of the first electronic device and the second electronic device can be lowered. After the data collection task of the first electronic device ends, most of the user data has already been transmitted to the second electronic device. The user does not need to wait or may only need to wait a little time for the data transmission to complete. Thus, the user experience is good.

### BRIEF DESCRIPTION OF THE DRAWINGS

FIG. 1 is a schematic diagram of a communication system suitable for a data transmission method according to one embodiment of the present disclosure.
FIG. 2A is a schematic diagram showing a scene of a data transmission method according to one embodiment of the present disclosure.
FIG. 2B is a schematic diagram showing a scene of a data transmission method according to another embodiments of the present disclosure.
FIG. 3 is a schematic interaction flowchart of a data transmission method according to one embodiment of the present disclosure.
FIG. 4 is a schematic interaction flowchart of a data transmission method according to another embodiment of the present disclosure.
FIG. 5 is a schematic diagram showing transmission of data to a server according to one embodiment of the present disclosure.
FIG. 6 is a schematic diagram showing transmission of data to a server according to another embodiment of the present disclosure.

### DETAILED DESCRIPTION OF THE EMBODIMENTS

The technical solutions of embodiments of the present disclosure are described below with reference to the accompanying drawings.

In the description of embodiments of the present disclosure, unless otherwise specified, "/" means "or." For example, A/B can represent A or B. The term "and/or" in this document is merely a way to describe the association between related objects, indicating that there may be three relationships. For instance, A and/or B can represent A alone, both A and B together, or B alone. Additionally, in the description of embodiments of the present disclosure, unless otherwise specified, "a plurality of" means two or more.

In embodiments of the present disclosure, terms such as "first," "second," and "third" are used for descriptive purposes only and should not be considered as indicating or implying relative importance or implicitly specifying the quantity of the indicated technical features. Thus, a feature associated with "first," "second," or "third" can explicitly or implicitly include one or more of such feature.

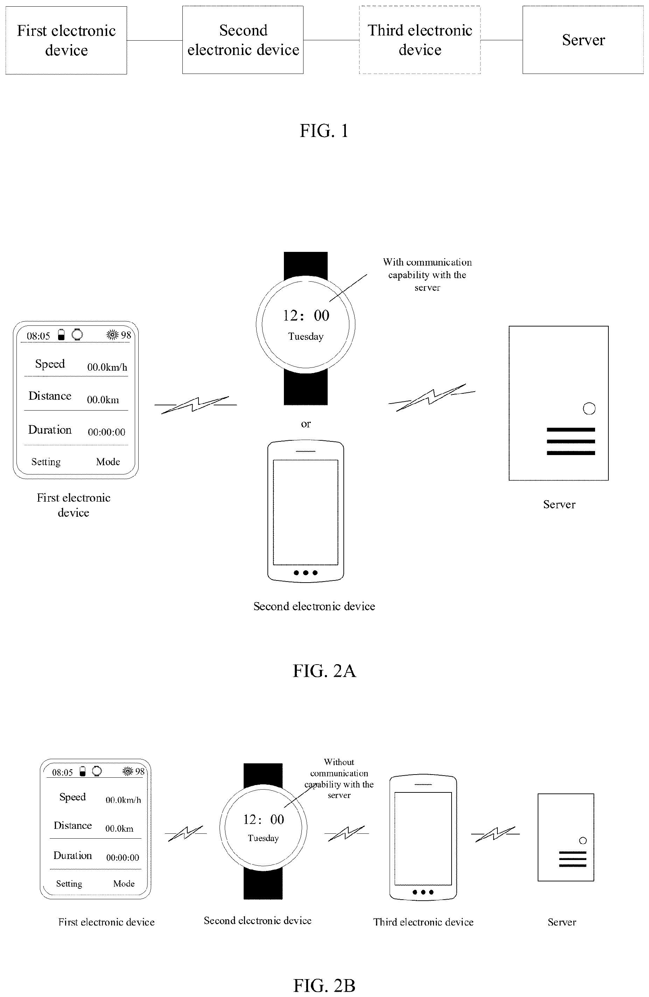

FIG. 1 is a schematic diagram of a communication system suitable for a data transmission method according to some embodiments of the present disclosure. The communication system includes a first electronic device, a second electronic device, and a server. In some embodiments, the communication system can further include a third electronic device. Each device is described in detail below.

The first electronic device can be mounted at a riding vehicle such as a bicycle or motorcycle and can be configured to collect and display user data during the cycling. For example, the first electronic device can be a cyclometer. The user data can include at least one of a riding distance, riding duration, riding speed, user heart rate, calories burned, slope during the riding, riding trajectory, cadence, altitude information, air pressure, user body temperature, etc., which is not limited in embodiments of the present disclosure.

The user data can be collected by the first electronic device itself or can be collected by other sensors or electronic devices and then transmitted to the first electronic device. The source of the user data is also not limited in embodiments of the present disclosure.

For example, after the cyclometer enters an exercise mode, the cyclometer can independently collect the user data such as the riding distance and duration. When the cyclometer is connected to electronic devices such as a heart rate strap, cadence sensor, power meter, or other sensors via ANT+ or Bluetooth, the cyclometer can also receive user body temperature, calories burned, cadence frequency, etc., from the electronic device to increase the data dimension and provide data support for scientific riding training for the user. The sensor arranged inside the cyclometer can also generate other user data according to the received user heart rate or user body temperature.

Additionally, the storage space of the first electronic device, such as the cyclometer, can be limited, and the data amount collected during each riding can be substantial. It is understandable that after the first electronic device operates for a long time, the storage space can be fully occupied, and newly collected data cannot be stored or overwritten by other data. To ensure proper preservation of the user data and synchronization with the App associated with the first electronic device, after each riding, the first electronic device may need to send the collected user data to the server for storage according to the user operation to prevent data loss.

The first electronic device, such as the cyclometer, typically can support short-range wireless communication technologies, such as Bluetooth (BT), Ultra-Wideband (UWB), or Near Field Communication (NFC), but may not support long-range wireless communication technologies, such as wireless fidelity (Wi-Fi) technology or cellular communication technology. Thus, the collected user data may need to be sent to the second electronic device first. Then, the second electronic device can send the user data to the server.

The second electronic device can be communicatively connected to the first electronic device via BT, UWB, NFC, etc., and receive the user data sent by the first electronic device through the communicative connection. For example, the second electronic device can include wearable devices such as smartwatches or smart bands, or terminal devices such as cellphones, tablets, or laptops.

It should be noted that the second electronic device may or may not have the capability of communicating with the server.

In some embodiments, as shown in FIG. 2A, the second electronic device has the capability of communicating with the server. The second electronic device can include, for example, a smartwatch supporting cellular communication or a smartphone supporting cellular communication and Wi-Fi. The second electronic device can directly send the user data to the server after receiving the user data.

In some other embodiments, as shown in FIG. 2B, the second electronic device does not have the capability of communicating with the server, e.g., a smartwatch that does not support cellular communication. In this case, during riding, the second electronic device can temporarily store the user data sent by the first electronic device. Thus, after the riding ends and the user moves away from the first electronic device, with communication capability of the third electronic device, the user data can be sent to the server.

It should be noted that during riding, the user can carry a plurality of electronic devices, for example, wearing a smartwatch while also carrying a smartphone. In such cases, the first electronic device can first select an electronic device with Wi-Fi or cellular communication capabilities (e.g., the smartphone) as the second electronic device.

In some embodiments, when the second electronic device is a wearable, the second electronic device can also assist the first electronic device to collect some user data and send the user data to the first electronic device for display. For example, when the second electronic device is a smartwatch, the second electronic device can collect and send the heart rate data of the user to the cyclometer for display to allow the user to monitor the heart rate change of the user during riding. Of course, the heart rate data can also be collected by a dedicated heart rate monitoring device, such as a heart rate strap, and transmitted to the first electronic device, which is not limited in embodiments of the present disclosure.

The third electronic device can be an optional device configured to, when the second electronic device does not support communication with the server, receive and send the user data sent by the second electronic device to the server for data synchronization. For example, the third electronic device can include a terminal device such as a smartphone, tablet, or laptop, which is not limited in embodiments of the present disclosure.

It is understandable that when the second electronic device supports the communication with the server, the communication system may not necessarily include the third electronic device.

The server can be configured to receive the user data sent by the second or third electronic device, store the user data, and synchronize the user data with the App.

It should be noted that in this communication system, simultaneous communication connections may not be required among different devices. For example, during riding, the second electronic device and the server may or may not maintain a communication connection. Alternatively, when the system includes the third electronic device, the communication connection between the second electronic device and the third electronic device, and the communication connection between the third electronic device and the server may or may not be maintained. As another example, after the riding ends, data transmission between the first electronic device and the second electronic device has ended. The user can carry the second electronic device to move away from the first electronic device. Then, the communication connection between the first electronic device and the second electronic device can be disconnected.

Based on the communication system of embodiments of the present disclosure, the communication method of embodiments of the present disclosure is described below with examples.

In the communication method of embodiments of the present disclosure, the communication system can control the electronic devices to realize the following two control functions.
(1) The first electronic device can be controlled to send the user data to the second electronic device.

For example, this process includes the following operations S11 to S14.

At S11, the first electronic device is controlled to continuously collect the user data.

At S12, when the user data is detected to meet the first preset condition, the first electronic device is controlled to establish a communication connection with the second electronic device.

At S13, the first electronic device is controlled to determine the first target data from the user data.

At S14, the first electronic device is controlled to send the first target data to the second electronic device via the communication connection.

(2) The second electronic device is controlled to send the user data to the server.

For example, this process includes the following operations S21 to S23.

At S21, when the first electronic device is detected to meet a second preset condition, the first electronic device is controlled to stop collecting the user data and establish a communication connection with the second electronic device.

At S22, the first electronic device is controlled to determine the second target data from the user data.

At S23, the first electronic device is controlled to send second target data to the second electronic device via the communication connection.

It should be noted that the communication system can be configured to control and perform the data transmission method of embodiments of the present disclosure through a certain control chip and controller, or the electronic devices, such as the first electronic device, the second electronic device, and the third electronic device, can perform autonomous control to realize the data transmission method of embodiments of the present disclosure.

In the following, the electronic devices in the communication system each autonomously making decision and control is taken as an example to describe in detail communication methods provided by embodiments of the present disclosure in connection with content (1) and content (2), respectively.
(1) The first electronic device is controlled to send the user data to the second electronic device.

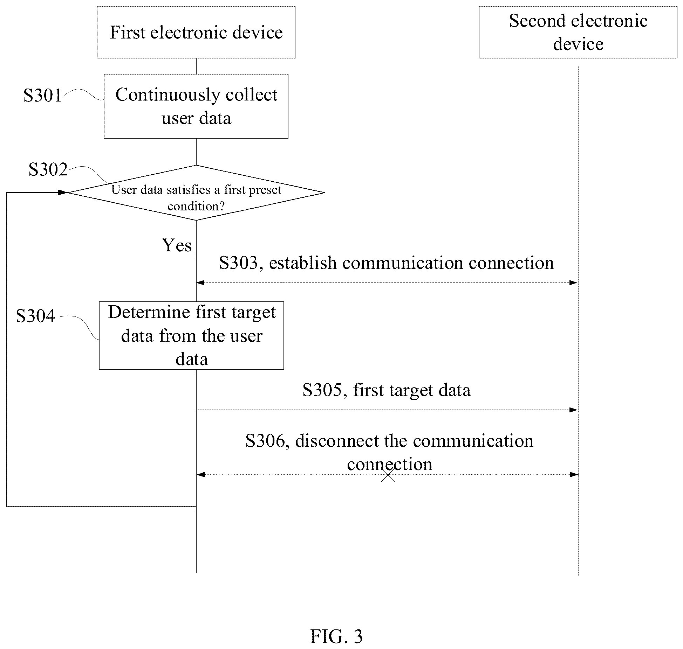

FIG. 3 is a schematic interaction flowchart of a data transmission method according to some embodiments of the present disclosure. As shown in FIG. 3, the method includes the following operations S301 to S306.

At S301, the first electronic device continuously collects the user data.

In embodiments of the present disclosure, the first electronic device (e.g., the cyclometer) continuously collecting the user data can include the first electronic device collecting the user data in real-time during operation, or collecting the user data once every preset time interval (e.g., 3s or 5s). It should be noted that the process of the first electronic device collecting the user data may not be affected by the transmission process, and may continue until the first electronic device receives a control instruction to stop collection or a pause instruction from the user.

While the first electronic device continuously collects the user data, the first electronic device can cyclically execute the following operations S302 to S306 to send the collected user data to the second electronic device.

At S302, the first electronic device determines whether the user data meets the first preset condition. If yes, proceed to operation S303.

In some embodiments, the first preset condition can include that the first electronic device detects that the data amount of the user data collected by the first electronic device between a first time and a second time is greater than or equal to a data amount threshold.

In some embodiments, the data amount threshold can be 4n Kb, where n is a positive integer. For example, the data amount threshold can be 4 KB, 8 KB, or 16 KB. This is because a smallest read/write unit (referred to as a sector) in the existing electronic device storage is typically 4 Kb. Thus, the data amount threshold can be set to 4n Kb. The user data in the sectors with fully stored data can be determined as the first target data, which is beneficial to sufficiently use the storage space of the electronic device.

In some other embodiments, the first preset condition can include detecting that the time interval between the first time and the second time is greater than or equal to the time threshold. For example, the time threshold can be 2 to 8 min, e.g., 4 min, 5 min, and 6 min. With the time range, e.g., 5 min, the data collected by the first electronic device can be about 4n Kb, which is beneficial to sufficient use of the storage space of the first electronic device.

The first time can be the time when the first electronic device starts to collect the user data, and the second time can be the time when the user data is detected to meet the first preset condition.

In some other embodiments, during the data collection process, the first electronic device can receive a pause instruction. The pause instruction can be used to control the first electronic device to pause the user data collection. In some embodiments, during the pause, the first electronic device can continue to collect the heart rate data. In addition, during the pause, if the first electronic device receives a recovery instruction, the first electronic device can recover the user data collection.

Based on this, the first electronic device can start collecting the user data at the first time T1, receive the pause instruction at fourth time T4, and receive the recovery instruction at fifth time T5, when (T4-T1) + (T2-T5) ≥ the time threshold, the user data can be determined to meet the first preset condition at the second time T2.

It should be noted that in embodiments of the present disclosure, the time when the first electronic device starts to collect the user data can refer to the initial start time when the first electronic device starts to collect the user data according to the user instruction. Additionally, each time after the first electronic device detects that the first preset condition / the third preset condition is met (see below), the first electronic device can be considered to enter a new data collection phase. That is, the time when the first electronic device starts to collect the user data can be the start time of this new data collection phase.

Based on this, after the first preset condition is determined to be met, the first electronic device not only needs to determine the first target data (S304), but also determine the second time as the first time. Thus, when determining new second time next time according to the first preset condition, the first electronic device can determine the first target data according to the first time and the new second time.

At S303, the first electronic device establishes a communication connection with the second electronic device.

The first electronic device can send the connection request to the second electronic device when detecting that the user data satisfies the above first preset condition. The connection request can be used to request to establish a communication connection with the second electronic device. For example, the connection request can be a Bluetooth connection request. The Bluetooth connection request can be used to request to establish a Bluetooth connection with the smartwatch. When the second electronic device receives the connection request sent by the first electronic device, the communication connection corresponding to the first electronic device can be established according to the connection request.

At S304, the first electronic device determines the first target data from the user data.

In some embodiments, the first electronic device can determine the user data collected between the first time and the second time as the first target data.

For example, when the first electronic device determines the first target data from the user data, the first electronic device can first determine the time for starting collecting the user data, e.g., the operation start time of the first electronic device or the time when the first electronic device enters to record the exercise mode, or the time when the user data is detected to satisfy the first preset condition last time, which can be determined as the first time. Then, the currently detected user data can be determined to satisfy the first preset condition, and the time can be determined as the second time. Subsequently, the user data between the first time and the second time can be determined as the first target data.

The order of S304 and S305 is not limited in embodiments of the present disclosure. That is, the first electronic device can first perform S304 and then S305, or first S305 and then S304.

At S305, the first electronic device sends the first target data to the second electronic device.

The first electronic device can send the first target data to the second electronic device through the communication connection established with the second electronic device. If the communication connection is a Bluetooth connection, the first electronic device can send the first target data to the second electronic device via the Bluetooth communication link.

At S306, when the first electronic device detects that the transmission of the first target data ends, the communication connection with the second electronic device is disconnected.

In some embodiments, the first electronic device can also clear the first target data when detecting that the transmission of the first target data ends to allow the first electronic device to reserve more storage space, or mark the sent first target data as sent data.

In some embodiments, operation S306 can further include, when the second electronic device detects that no user data is received from the first electronic device within a certain time, disconnecting the communication connection with the first electronic device.

In some embodiments, in operations S301 to S306, operations S303 and S306 may be omitted. That is, the first electronic device and the second electronic device can continuously maintain the communication connection. The first electronic device can send the first target data to the second electronic device only when the user data satisfies the first preset condition. When the data transmission ends, the connection mode between the first electronic device and the second electronic device can switch from a transmission mode to a low-power mode.

In some embodiments, the first electronic device can send the user data to the second electronic device according to a certain time interval or according to a predetermined data amount threshold. After the transmission of the user data is completed, the first electronic device can disconnect the communication connection with the second electronic device, or the first electronic device can still remain in the communication connection with the second electronic device, but the connection mode can be switched from the transmission mode to the low power mode. By limiting the size of the data amount of each data transmission, the data can be intermittently transmitted between the first electronic device and the second electronic device during exercising. Thus, the second electronic device may not need to receive the user data collected by the first electronic device in real-time. That is, the second electronic device may not need to remain in the high power status for data transmission in real-time to save the power of the device and prevent the battery consumption of the first electronic device or the second electronic device. Then, even after riding for a long time, the power consumption of the second electronic device can still remain low to improve the user experience.

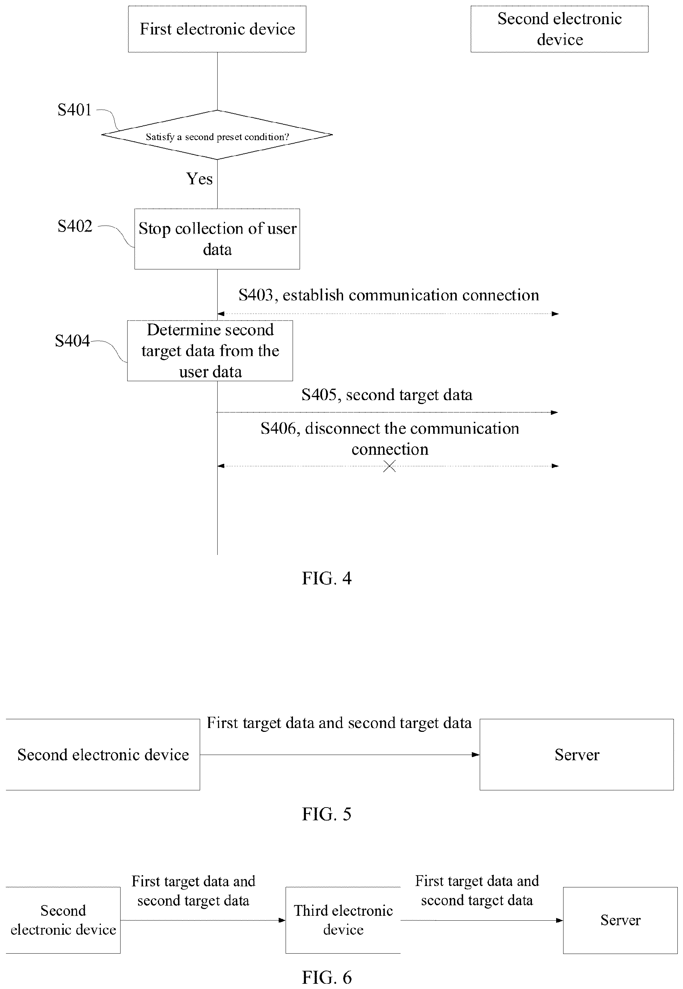

FIG. 4 is a schematic interaction flowchart of another data transmission method according to some embodiments of the present disclosure. As shown in FIG. 4, the method includes the following operations S401 to S406.

At S401, the first electronic device determines whether the second preset condition is satisfied. If yes, proceed to S402.

The second preset condition can include the first electronic device receiving the control instruction of controlling the first electronic device to stop collecting the user data. For example, in response to the user performing a control operation on a control element for stopping the user data collection in the operation interface of the first electronic device, the first electronic device can generate a control instruction. Alternatively, in response to the user performing the control operation on a stop key, the first electronic device can generate the control instruction. Still alternatively, the first electronic device can receive a control instruction for controlling the first electronic device to stop collecting the user data from another electronic device.

At S402, the first electronic device stops collecting the user data.

In some embodiments, when the first electronic device receives the control instruction for stopping collecting the user data, the first electronic device can stop collecting the user data according to the control instruction.

At S403, the first electronic device establishes the communication connection with the second electronic device.

For the method for the first electronic device to establish the communication connection with the second electronic device, reference can be made to implementation of operation S303, which is not repeated here.

At S404, the first electronic device determines the second target data from the user data.

In some embodiments, the first electronic device can determine the user data collected between the first time and the third time as the second target data. The first time can be the time when the first electronic device starts to collect the user data. The third time can be the time when the first electronic device is detected to satisfy the second preset condition.

For example, when the first electronic device determines the second target data from the user data, the first time can be determined first. For the determination method of the first time, reference can be made to operation S304, which is not repeated here. Then, the time when the first electronic device is detected to satisfy the second preset condition can be determined as the third time. Then, the user data between the first time and the third time can be determined to be the second target data.

In some other embodiments, the first electronic device can determine all the collected user data that has not been sent to the second electronic device as the second target data.

At S405, the first electronic device sends the second target data to the second electronic device.

In some embodiments, the first electronic device can send the second target data to the second electronic device via the communication connection established with the second electronic device, e.g., the Bluetooth communication connection.

At S406, when detecting that the transmission of the second target data ends, the first electronic device disconnects the communication connection with the second electronic device.

When the transmission of the second target data ends, the first electronic device can disconnect the communication connection with the second electronic device to save the power of the device. The battery consumption of the first electronic device or the second electronic device can be prevented, which improves the user experience.

In some embodiments, operation S406 can include, when detecting that no data from the first electronic device is received within a certain time, the second electronic device disconnecting the communication connection with the first electronic device.

In some embodiments, in operations S401 to S406, operations S403 and S406 may not be performed. That is, the first electronic device can maintain the communication connection with the second electronic device. Only when the user data satisfies the second preset condition, the first electronic device can send the second target data to the second electronic device. When the data transmission ends, the connection mode between the first electronic device and the second electronic device can switch from the transmission mode to the low-power mode.

In some embodiments, based on the last data transmission between the first electronic device and the second electronic device, the data amount can be smaller than the data amount threshold. Thus, the time needed for the data transmission can be way shorter than the time needed for the first electronic device to transmit all the data to the second electronic device at one time. Based on this, the user can basically leave the bike quickly after the riding without removing the first electronic device. One-time data transmission can be performed on the first electronic device individually, which greatly enhances the convenience for the user and improves the user experience.

In some embodiments, after stopping collecting the data, the ratio information of the data transmission can be displayed and can be used to represent the ratio between the user data that has been transmitted to the second electronic device and the collected user data to allow the user to know the situation of the data transmission. Then, the user can determine whether the user can carry the second electronic device to move away from the first electronic device. For example, the ratio information can be represented through numbers and/or a progress bar, which is not limited in embodiments of the present disclosure.

Alternatively, after the first electronic device transmits the first target data and the second target data, the first electronic device can output prompt information to prompt the user that the transmission of the user data ends to allow the user to move away from the first electronic device. For example, the prompt information can include text information, audio information, or sign information, which is not limited in embodiments of the present disclosure.

(2) The second electronic device is controlled to send the user data to the server.

In some embodiments, as shown in FIG. 5, the second electronic device has the capability of communicating with the server. In this case, the second electronic device can directly send the received first target data and second target data to the server to allow the server to store and synchronize the user data collected by the first electronic device.

In some embodiments, when the second electronic device has the capability of communicating with the server, after receiving the first target data, the second electronic device can immediately send the user data to the server. Alternatively, after receiving the second target data, the second electronic device can send the first target data and the second target data to the server together, which is not limited in embodiments of the present disclosure.

In some other embodiments, as shown in FIG. 6, the second electronic device does not have the capability of communicating with the server. The second electronic device can be mainly configured to temporarily store the user data collected by the first device. The second electronic device can send the received first target data and the second target data to the third electronic device, which has the capability of communicating with the server. Then, the third electronic device can send the received first target data and the second target data to the server.

For example, the communication connection between the second electronic device and the third electronic device can be realized through BT, Wi-Fi, UWB, or cellular data. The communication connection between the second electronic device/the third electronic device and the server can be realized through Wi-Fi and cellular data.

In summary, through the data transmission method of embodiments of the present disclosure, the first electronic device (e.g., a cyclometer) can establish a communication connection with the second electronic device (e.g., watch and cell phone) each time after a certain time according to the preset condition when collecting the user data in real-time. The first electronic device can send some user data to the second electronic device through the communication connection. Then, the communication connection can be disconnected, or the connection mode can be switched to the low-power mode. In this method, the power consumption of the first electronic device and the second electronic device can be reduced. After the data collection task of the first electronic device ends, most of the user data has been transmitted to the second electronic device. Thus, basically, when the exercise end, the exercise data may have been transmitted from the first electronic device to the second electronic device. The user does not need to wait or may only need to wait very short time until the data transmission ends. Then, the user can quickly leave the first electronic device after the sports and does not need to wait for the user data transmission at the cyclometer or remove the cyclometer and take the cyclometer away. Thus, the user experience can be good.

Taking the first electronic device being a cyclometer as an example, if the user carries the smartwatch and the cell phone during riding, the cyclometer can preferentially select the cell phone as the second electronic device and send the first target data and the second target data to the cell phone. The cell phone can directly transmit the first target data and the second target data to the server. After the riding ends, the transmission of the user data collected by the cyclometer can basically end. The user can quickly leave the cyclometer, and the user experience can be good.

For example, when the first electronic device is a cyclometer, if the user carries a smartwatch that does not support the communication with the server during riding but does not carry an electronic device that supports the communication with the server, such as a cell phone, then the cyclometer can select the smart watch as the second electronic device. In this case, the smart watch can be used as a relay device to store the received first target data and second target data. After the user finishes riding, almost all the user data collected by the cyclometer may have been transmitted to the smartwatch. The user can also quickly leave the cyclometer and does not need to wait a long time for the data transmission at the cyclometer, or remove the cyclometer and take the cyclometer away. Subsequently, the smart watch can then send the received user data, i.e., the first target data and the second target data, to the server through an electronic device, such as a cell phone or a tablet. The user experience is good.

It should be understood that the numbering of the operations in the above embodiments does not imply the execution order. The execution order of the processes should be determined by the function and internal logic of the processes and should not limit the implementation of embodiments of the present disclosure.

Embodiments of the present disclosure also provide an electronic device. The electronic device can include a processor and a memory. The processor can be configured to execute a computer program stored in the memory to implement the screen brightness adjustment method provided by the above embodiments. For example, the electronic device can be a cyclometer.

Embodiments of the present disclosure also provide a computer-readable storage medium storing a computer program that, when executed by the processor, implements the screen brightness adjustment method provided by the above embodiments.

In embodiments of the present disclosure, the division of frameworks or modules can be merely a logical functional division. In practical applications, other division methods may be provided. For example, a plurality of frameworks or modules can be combined or integrated into another system, or some features may be omitted or not executed.

Additionally, the functional modules of various embodiments of the present disclosure can be integrated into a processing module, or exist as separate physical modules, or two or more modules can be integrated into one module. The integrated module can be implemented in hardware or software.

Those skilled in the art can clearly understand that, for convenience and brevity of description, the specific working processes of the systems, apparatuses, and units described above can refer to the corresponding processes in the above method embodiments and will not be repeated here.

In the present disclosure, the terms "one embodiment" or "some embodiments" mean that specific features, structures, or characteristics described in connection with the embodiments can be included in one or more embodiments of the present disclosure. Thus, phrases such as "in one embodiment," "in some embodiments," "in other embodiments," or "in further embodiments" used in different parts of the specification do not necessarily all refer to the same embodiment but mean "one or more but not all embodiments," unless otherwise specifically emphasized. The terms such as "comprising," "including," "having," and their variations can mean "including but not limited to," unless otherwise specifically emphasized.

The above embodiments are only used to illustrate the technical solutions of the present disclosure and not to limit the technical solutions of the present disclosure. Although the present disclosure has been described in detail with reference to the above embodiments, those skilled in the art should understand that modifications can still be made to the technical solutions described in the above embodiments or equivalently replace some of the technical features. Such modifications or replacements will not cause the essence of the corresponding technical solutions to depart from the spirit and scope of the technical solutions of embodiments of the present disclosure and should be included within the scope of the present disclosure.

## Claims

1. A data transmission method, applied to a communication system including a first electronic device and a second electronic device, comprising:
controlling the first electronic device to continuously collect user data;
upon detecting that the user data satisfies a first preset condition, controlling the first electronic device to establish a communication connection with the second electronic device;
controlling the first electronic device to determine first target data from the user data; and
controlling the first electronic device to transmit the first target data to the second electronic device via the communication connection.

2. The method according to claim 1, wherein controlling the first electronic device to determine the first target data from the user data includes:
controlling the first electronic device to determine user data collected between a first time and a second time as the first target data;
wherein the first time is when the first electronic device begins collecting the user data, and the second time is when the user data is detected to meet the first preset condition.

3. The method according to claim 2, wherein the first preset condition includes at least one of:
detecting that a data amount of the user data collected by the first electronic device between the first time and the second time is greater than or equal to a data amount threshold; or
detecting that a time interval between the first time and the second time is greater than or equal to a time threshold.

4. The method according to any one of claims 1 to 3, further comprising:
upon detecting that transmission of the first target data is completed, controlling the first electronic device or the second electronic device to disconnect the communication connection.

5. The method according to any one of claims 1 to 4, further comprising:
upon detecting that the first electronic device satisfies a second preset condition, controlling the first electronic device to stop collecting the user data and to establish the communication connection with the second electronic device;
controlling the first electronic device to determine second target data from the user data; and
controlling the first electronic device to transmit the second target data to the second electronic device via the communication connection.

6. The method according to claim 5, wherein controlling the first electronic device to determine the second target data from the user data includes:
controlling the first electronic device to determine the user data collected between the first time and a third time as the second target data;
wherein the first time is when the first electronic device begins collecting the user data, and the third time is when the first electronic device is detected to meet the second preset condition.

7. The method according to claim 5 or 6, wherein the second preset condition includes detecting that the first electronic device receives a control instruction of controlling the first electronic device to stop collecting the user data.

8. The method according to any one of claims 5 to 7, further comprising:
upon detecting that transmission of the second target data is complete, controlling the first electronic device or the second electronic device to disconnect the communication connection.

9. The method according to any one of claims 5 to 8,
wherein the system further includes a third electronic device and a server,
the method further comprising:
controlling the second electronic device to transmit the received first target data and the second target data to the third electronic device; and
controlling the third electronic device to transmit the received first target data and second target data to the server.

10. The method according to any one of claims 1 to 9, wherein the user data includes at least one of a riding distance, a riding duration, a riding speed, a user heart rate, calories burned, a slope during riding, a riding trajectory, or cadence.

11. A data transmission method, applied to a first electronic device, comprising:
continuously collecting user data;
upon detecting that the user data satisfies a first preset condition, controlling the first electronic device to establish a communication connection with a second electronic device;
determining first target data from the user data; and
transmitting the first target data to the second electronic device via the communication connection.

12. The method according to claim 11, wherein determining the first target data from the user data includes:
determining user data collected between a first time and a second time as the second target data;
wherein the first time is when the first electronic device begins collecting the user data, and the second time is when the user data is detected to meet the first preset condition.

13. The method according to claim 11 or 12, wherein the first preset condition includes at least one of:
a data amount of the user data collected by the first electronic device between the first time and the second time being greater than or equal to a data amount threshold; or
a time interval between the first time and the second time being greater than or equal to a time threshold.

14. The method according to any one of claims 11 to 13, further comprising:
disconnecting the communication connection after detecting that transmission of the first target data is complete.

15. The method according to any one of claims 11 to 14, further comprising:
upon detecting that the first electronic device satisfies a second preset condition, stopping collecting the user data and establishing a communication connection with the second electronic device;
determining second target data from the user data; and
transmitting the second target data to the second electronic device via the communication connection.

16. The method according to claim 15, wherein determining the second target data from the user data includes:
determining user data collected between the first time and a third time as the second target data;
wherein the first time is when the first electronic device begins collecting the user data, and the third time is when the first electronic device is detected to meet the second preset condition.

17. The method according to claim 15 or 16, wherein the second preset condition includes detecting that the first electronic device receives a control instruction used to control the first electronic device to stop collecting the user data.

18. The method according to any one of claims 15 to 17, further comprising:
disconnecting the communication connection upon detecting that transmission of the second target data is completed.

19. The method according to any one of claims 11 to 18, wherein the user data includes at least one of a riding distance, a riding duration, a riding speed, a user heart rate, calories burned, a slope during riding, a riding trajectory, and a cadence.

20. A communication system comprising a first electronic device and a second electronic device, wherein:
the first electronic device is configured to execute the method according to any one of claims 11 to 19; and
the second electronic device is configured to receive the user data transmitted by the first electronic device.

21. The system according to claim 20, further comprising:
a third electronic device;
wherein:
the second electronic device is further configured to transmit the received user data to the third electronic device; and
the third electronic device is configured to receive and transmit the user data to a server.

22. The system according to claim 21, wherein the second electronic device is a wearable device.

23. A computer-readable storage medium storing a computer program that, when executed by a processor, implements the method according to any one of claims 1 to 19.

24. A chip comprising a processor and a memory, the memory storing a computer program that, when executed by the processor, implements the method according to any one of claims 1 to 19.

25. A computer program product storing a computer program that, when executed by a processor, implements the method according to any one of claims 1 to 19.
